# EUROPEAN PATENT APPLICATION

(11) **EP 2 422 625 A1**
(43) Date of publication of application: **29.02.2012**
(21) Application number: 10009039.8
(22) Date of filing: 31.08.2010
(51) Int. Cl.: A22C 7/00

(54) **Patty forming apparatus**

(71) Applicant: CFS Bakel B.V., 5761 EN Bakel (NL)
(72) Inventor: Van Gerwen, Hendrikus Petrus Gerardus, NL-5711 VT, Someren (NL); Righolt, Hendrik Jan, NL-4904 PS, Oosterhout (NL)
(74) Representative: Wolff, Felix

(57) **Abstract**

The present invention relates to a patty forming apparatus with a mold plate (2) that is reciprocable between two positions (3,4) and that comprises cavities (5) which are filled in the filling station (6) with a patty material and which are emptied in the removal station (7) whereas it comprises two removal stations (7,8).

## Description

The present invention relates to a patty forming apparatus with a mold plate that is reciprocable between two positions and that comprises cavities which are filled in the filling station with a patty material and which are emptied in the removal station, whereas it comprises two removal stations.

Such a patty forming apparatus is known from state in the art, for example US2005/0013895A1. However, this apparatus has the deficiency, that it is rather complicated and that it lacks flexibility.

It was therefore the objective of the present invention to provide a patty forming apparatus that does not comprise the deficiencies of the patty forming apparatus according to the status in the art.

This objective is attained by a patty forming apparatus with a mould-plate that is reciprocable between two positions and that comprises cavities which are filled in the filling station with a patty-material and which are emptied in the removal station, whereas it comprises two discharge stations and one belt per removal station.

The present invention relates to a patty forming apparatus. In this patty forming apparatus, a patty material which is formable, for example a dough, minced meat or the like, can be formed into a desired shape. This shape can be two dimensional, i. e. a disc or three dimensional, i.e. a ball. According to the present invention, the patty forming apparatus comprises a mould plate that reciprocates between two different positions; i. e. a filling and a discharge position. This mould plate comprises cavities, into which the patty material is filled, preferably pressed and thereby formed. The mould plate preferably comprises a multitude of cavities which are arranged in an array, i. e. which comprise a multitude of parallel rows, each row preferably comprising a multitude of cavities. The rows are preferably arranged perpendicular to the direction of motion of the mould plate. Preferably, the cavities in one row and/or one or more rows are filled simultaneously in the filling station. Preferably, the cavities in one row and/or one or more rows are then emptied simultaneously in the discharge station.

According to the present invention, the inventive patty forming apparatus comprises two discharge stations, which are located to the left and the right of the filling station. The mold plate reciprocates between these two stations. In these discharge stations, the formed patties are removed from the cavity. According to the present invention, the inventive patty forming apparatus comprises an individual belt per removal station. Thus, the inventive apparatus can be operated with much more flexibility than the apparatus according to the state of the art. The two belts can be operated with the same or different speeds. The transportation direction of the two belts is preferably identical. Preferably, one belt is longer than the other and more preferably, the longer belt is operated at a higher speed than the shorter belt. Preferably, the belts are located at least partially at different heights. More preferably, at least one belt can comprise means to lower or lift it at least partially. In another preferred embodiment of the present invention at least one belt comprises different segments, which more preferably can be moved even more preferably rotated relative to each other.

Preferably, at least one belt comprises means to alter the height of the belt at least partially before and/or during the transportation of the patties. In a preferred embodiment, the belt is tilted and/or partial segments of a belt are lowered and lifted. This preferred embodiment of the present invention has the advantage, that during the removal of the patties from the mold plate, the distance between the mold plate and the belt can be very small, so that deformation or destruction of the patties during their drop from the mould plate onto the belt can be avoided. During transportation along the belt however, the distance between the surface of the belt and the other parts of the inventive patty forming apparatus can be relatively large to avoid a collision between the formed patties on the belt and other parts of the inventive patty forming apparatus.

Preferably, the two belts are connected by a seesaw. One end of this seesaw can be brought into alignment with each of the belts. Thus, the patty load of the two belts can be combined on one belt, which is located downstream of the seesaw. The seesaw preferably also comprises a belt. This belt can be operated at different velocities than the velocities of the first and/or second belt of the patty forming apparatus in order to increase or decrease the distance between two patty rows. This holds also true for the transportation means downstream of the seesaw.

Preferably, at least one of the belts, the seesaw and/or the belt downstream are shiftable sidewards, i.e in a horizontal direction perpendicular to the direction of transportation. This preferred embodiments allows to stagger the patties on the belt.

According to a preferable or another inventive embodiment of the present invention, the mold plate is at least partially porous. Preferably, the cavities especially their bottom and their sidewall are made of a porous-, for example a sintered-material. This embodiment of the present invention has the advantage, that the patties can be ejected out of the plate for example with air. Additionally, the cavity can be vented via the porous material during filling of the cavities.

In another preferred or inventive embodiment of the present invention, the outlet of the filling station is below the mold plate. This embodiment of the present invention has the advantage, that the filling and the discharge of the mould-plate takes place on the same sides of the mold plate, so that there need not be any through-holes in the mold plate.

Preferably, the inventive patty forming apparatus comprises two outlet means, preferably two air outlet means to eject the patties out of the molds. This embodiment of the present invention has the advantage, that no pistons are needed to remove the patties from the mold plate.

According to another inventive or preferred embodiment of the present invention, the mold plate comprises a slot to accommodate a stick. The sticks are inserted into the patty and are utilized to hold the patty. The slot guides the stick during its insertion into the patty. The stick is preferably inserted into the patty by moving the mold plate relative to the stick and/or the stick relative to the mold plate. The slot has preferably a U-shaped, square or rectangular ross-section. Preferably, the slot is in connection with a cavity. This facilitates the insertion of the stick into the patty via the slot. Preferably, the slot extends from the cavity in the mold plate to the side-limit of the mold plate that is oriented perpendicular to the direction of motion.

Preferably, the mold plate comprises to rows of cavities, each row comprising at least one, preferably a multitude of cavities, whereas the cavity/cavities in one row are staggered to the cavity/cavities in the other row. This preferred embodiment of the present invention has the advantage that the patties can be placed on a belt in a staggered pattern without moving the belt sidewardsly.

Another subject matter of the present invention is a process for the transportation of patties, whereas the patties are staggered. This embodiment of the present invention allows to increase the load on the belt per unit-length. Furthermore it has advantages regarding the subsequent processing and/or packaging of the patties.

Preferably, the patties comprise a stick, whereas the sticks point at least partially in different directions. Preferably, one stick points in the direction of motion of the transportation belt, while the next one points in the opposite direction.

The invention is now explained according to figures 1-13. These explanations do not limit the scope of protection. The explanations apply to all inventive embodiments of the present invention likewise.
**Figure 1 - 5** show the inventive patty forming apparatus and its operation.
**Figure 6 -11** show another embodiment of the inventive patty forming apparatus.
**Figure 12** shows the forming of patties with a stick.
**Figure 13** shows a belt loaded with staggered patties.
**Figure 14** shows a mold plate with staggered cavities.

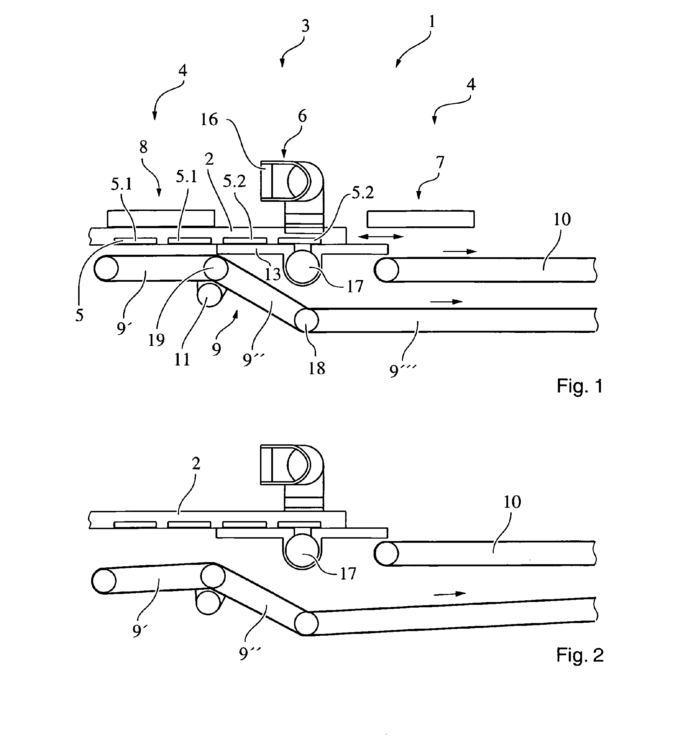

**Figure 1** shows the inventive patty forming apparatus, which comprises a mold plate 2 with a multitude of cavities. In the present example, the mold plate comprises four rows of cavities, whereas each row comprises a multitude of cavities 5. The rows are oriented perpendicular to the motion of the mold plate 2. The motion of the mold plate is depicted by the double arrow. Furthermore, the inventive patty forming apparatus comprises one filling station 6 in which the patty material is pressed into one or more rows of cavities simultaneously. In the present example, two rows of cavities are filled simultaneously. Furthermore, the inventive patty forming apparatus comprises a first discharge station 7 and a second discharge station 8. In the embodiment according to figure 1 two rows of cavities 5.1 are presently emptied in the discharge station 8, while simultaneously two rows of cavities 5.2 are filled with the patty forming material in the filling station 6. As can be seen from figure 1, each discharge station 7, 8 comprises its own belt 9, 10, whereas the first discharge station 8 is adjacent to belt 9 and the second discharge station 7 is adjacent to belt 10. In figure 1 the formed patties are presently loaded on belt 9 and transported in a direction depicted by the arrow. Belt 9 preferably comprises three segments 9' - 9"' whereas segments 9' and 9" are movable relative to segment 9', preferably the belt comprises two axis 18, 19, whereas segment 9" can turn around axis 18 relative to segment 9'" and segment 9' can turn relative to segment 9" around axis 19. Furthermore, belt 9 comprises means 11; for example motor means, which can lower and lift belt 9 especially its segments 9', 9".

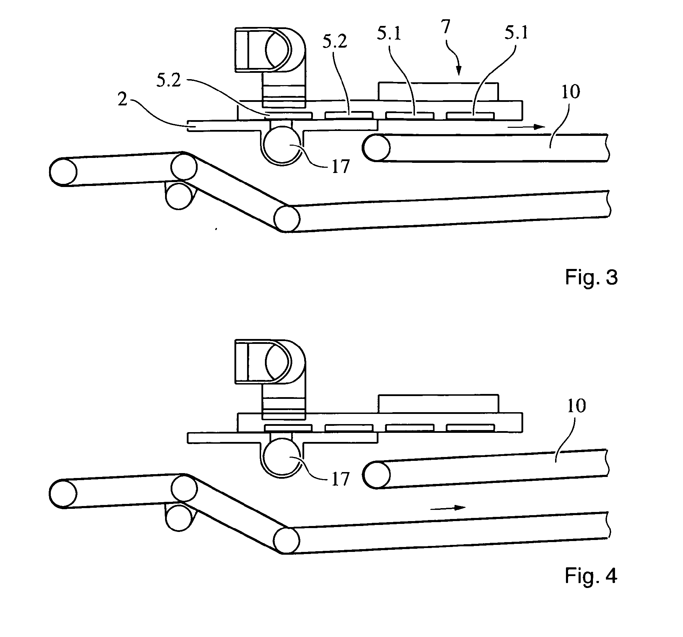

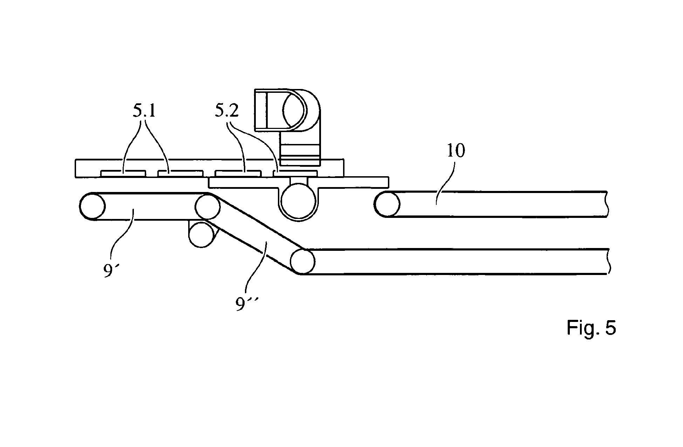

**Figure 2** shows the situation after the patties (not depicted) have been dropped on segment 9' of belt 9. Afterwards, this belt is lowered to avoid a collision of the patties especially with the means of the filling station 6. The patties are transported from the left to the right as depicted by the arrow. Simultaneously or sequentially, mold plate 2 is moved into its second position (please compare figure 2) in which the cavities which have just been emptied are now filled with patty material in the filling station. The cavities which have been filled in the previous step have now been aligned with the second discharge station 7. In this discharge station air is ejected in order to eject the formed patties (not depicted) on belt 10. Subsequently, as can be seen in figure 4 belt 10 is tilted and thereby lowered in order to avoid a collision between the patties on the belt and the patty forming apparatus. Afterwards as can be seen from figure 5 the mold plate 9 is moved back into the position as already depicted in figure 1 and the process restarts.

As can be seen from figures 1 - 5, the outlet 13 of the filling station, which is in the present case designed as a plate, has a width so that four rows of cavities can be filled simultaneously. Additionally, the outlet comprises a divider 17, for example a valve, that assures, that the patty material is only ejected through the segment of outlet plate 13 that is covered by the mold-plate.

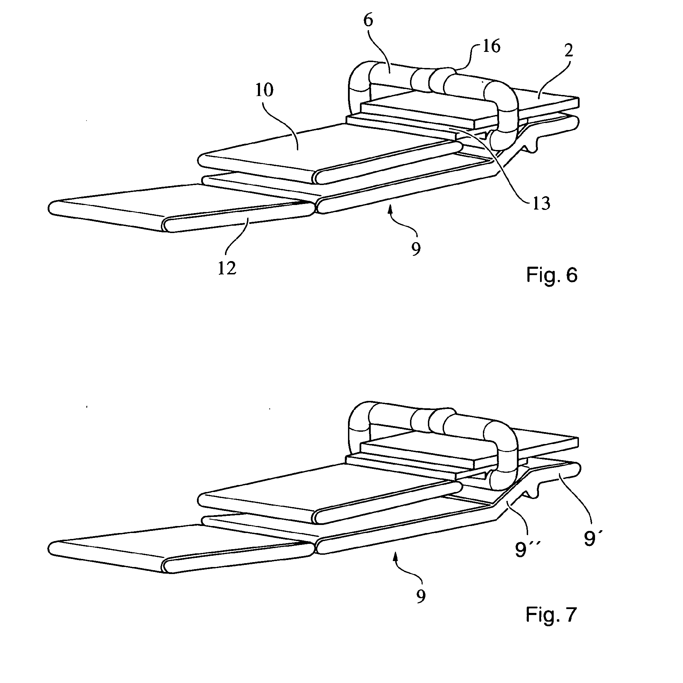

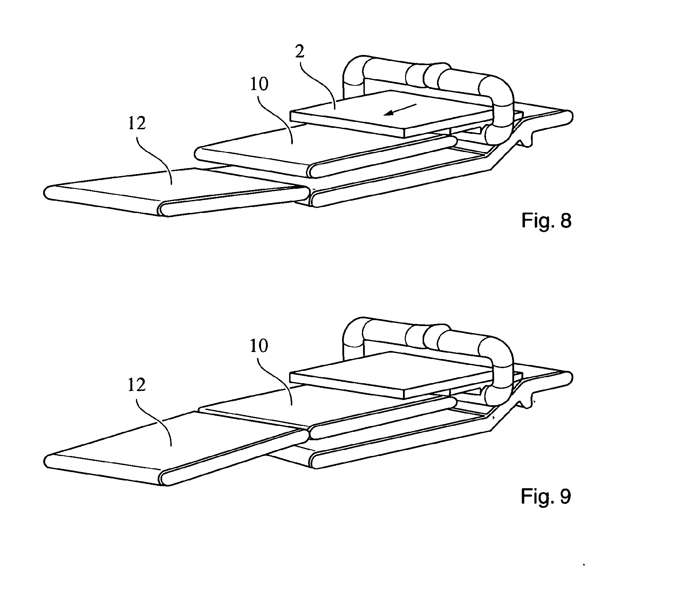

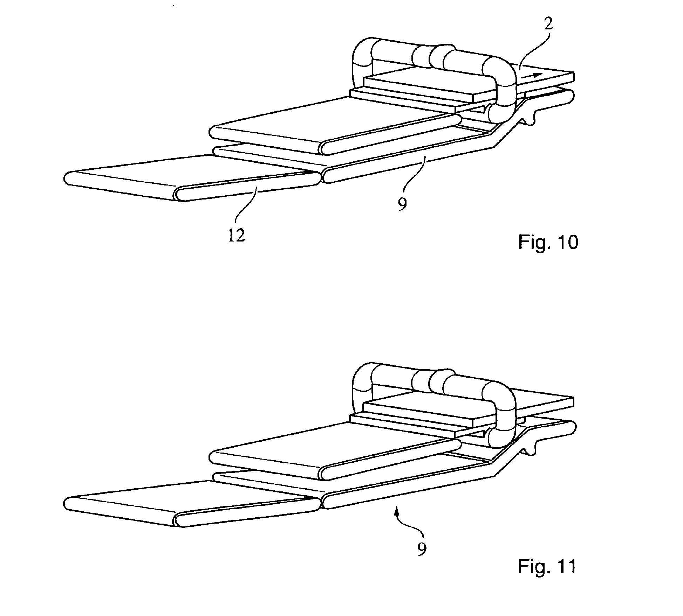

**Figures 6 - 11** show a second embodiment of the present invention, which is essentially identical to the embodiment according to figures 1 - 5 so that the disclosure regarding figures 1 - 5 also applies to this embodiment. In this embodiment, the first belt 9 is made from one segment and is tilted in order to increase the space between the belt 9 and the filling station especially the distance between segment 9' and filling the filling station. Additionally, this embodiment of the present invention comprises a seesaw 12, which can be aligned either with belt 9 or with belt 10. In figure 6 the patties are loaded on belt 9. Thus, the seesaw 12 is aligned with this belt 9. Then, as can be seen in figure 8, the mold plate 2 is moved into its second position in which the mold cavities are emptied on belt 10. During this movement or afterwards, the seesaw 12 is tilted so that it is aligned with belt 10, as can be seen in figure 9. Then, as depicted in figures 10 and 11, the mold plate 2 is moved back into its initial position (please compare figure 6) and the seesaw is again aligned with belt 10. Due to the seesaw, the loads of the belts 9 and 10 can be combined on one belt. The seesaw 12 or a belt that is downstream of the seesaw can be operated at a different speed than the seesaw itself or belts 9 and 10 in order to increase or decrease the distance between two rows.

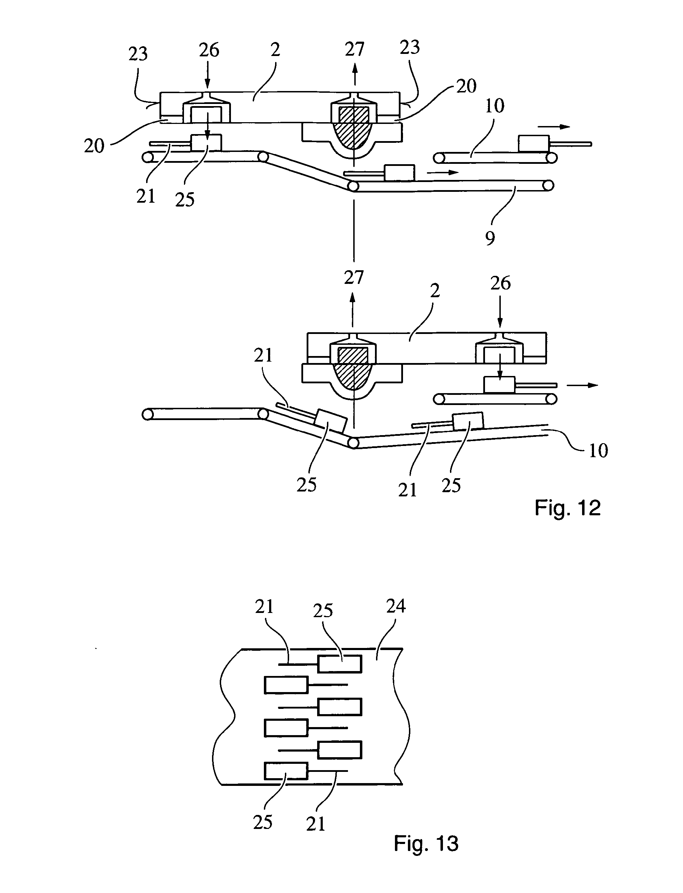

**Figure 12** shows yet another embodiment of the present invention. In the present case, sticks 21 are inserted into the patties after and/or while the patties are formed. The mold plates therefore comprise one slot 20 per cavity, which guides the stick during its insertion into the patty. The stick can be inserted into the patty by moving the stick and/or by moving the mold plate. The slots 20 are open towards the bottom and extend from the cavity towards the side limit 23 of the mold plate 2 that is perpendicular to the motion of the mold plate which is depicted by the double arrow. Due to the opening of the slot 20 towards the bottom, the patty plus the stick can be easily deformed from the cavity of the mold plate. Due to the direction of the slot in the plate, patties are formed whose stick points in the direction of the motion of the belt (patties on belt 10) and whose stick is directed opposite of the motion of the belt (patties on transportation belt 9).

By means of for example a seesaw 12 as depicted in figures 5 - 11, a pattern as depicted in figure 13 can be created. The person skilled in the art understands that this pattern also requires that belt 9, belt 10, the sea saw and/or belt 24 downstream of belt 9 and 10 and/or the seesaw have to be movable sideward, i.e. horizontally and perpendicularly to the direction of motion of the belt and/or a motion with such a component. The pattern according to figure 13 has the advantage, that the patty load per unit area of a belt can be increased which is advantageous for further processing of the patties and/or the packaging of the patties because a relatively smaller package is needed. The person skilled in the art understands, that this is also true for patties without a stick.

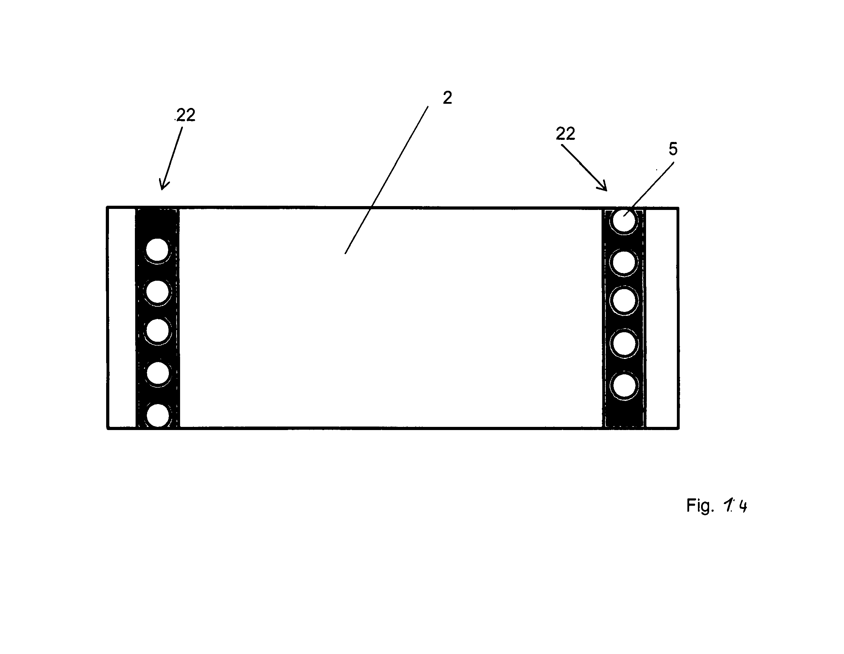

Staggered patties as depicted in figure 13 can also be achieved by arranging the cavities in the mold plate 2 in a staggered mode, as depicted in figure 14. With such a mold plate, the sideward motion of one of the belts and/or the seesaw is not needed.

### List of reference signs:

- 1: patty forming apparatus
- 2: mold plate
- 3: filling position
- 4: discharge position
- 5: cavities
- 5.1: cavities being emptied
- 5.2: cavities being filled
- 6: filling station
- 7: second discharge-station
- 8: first discharge-station
- 9: first belt
- 9'-9'": segments of the first belt
- 10: second belt
- 11: means
- 12: seesaw
- 13: outlet of the filling-station
- 14: first outlet-means
- 15: second outlet-means
- 16: inlet of the filling-station
- 17: divider
- 18: axis
- 19: axis
- 20: slot
- 21: stick
- 22: row of cavity
- 23: side limit
- 24: belt
- 25: patty
- 26: gas, air
- 27: vent

## Claims

1. Patty forming apparatus (1) with a mould-plate (2) that is reciprocable between two positions (3, 4) and that comprises cavities (5) which are filled in the filling station (6) with a patty-material and which are emptied in the removal station (7), whereas it comprises two discharge stations (7, 8), **characterized in, that** it comprises one belt (9, 10) per removal station (7, 8).

2. Patty forming apparatus (1), **characterized in, that** at least one belt (9, 10) comprises means to lift and lower it at least partially.

3. Patty forming apparatus (1), according to one of the preceding claims, **characterized in, that** at least one belt (9, 10) comprises means (11) to alter the height of the belt during transportation of the patties at least partially.

4. Patty forming apparatus (1), according to one of the preceding claims, **characterized in, that** the belts (9, 10) are connected to a seesaw (12).

5. Patty forming apparatus according to one of the preceding claims, **characterized in, that** at least one belt (9, 10, 24) is shiftable sidewards.

6. Patty forming apparatus (1), according to one of the preceding claims or the preamble of claim 1, **characterized in, that** the mould plate is at least partially porous.

7. Patty forming apparatus (1), according to one of the preceding claims or the preamble of claim 1, **characterized in, that** the outlet (13) of the filling-station (3) is below the mold plate.

8. Patty forming apparatus (1), according to one of the preceding claims, **characterized in, that** it comprises outlet-means (14, 15) to eject the patties out of the mould plate (2).

9. Patty forming apparatus (1), according to one of the preceding claims or according to the preamble of claim 1, **characterized in, that** the mold plate (2) comprises a slot (20) to accommodate a stick (21).

10. Patty forming apparatus (1), according to claim 9, **characterized in, that** the slot (20) is in connection with a cavity.

11. Patty forming apparatus (1), according to claim 10, **characterized in, that** the slot (20) extends from the cavity (5) to the side-limit (23) of the mold plate.

12. Patty forming apparatus (1) to one of the preceding claims, **characterized in, that** the mold plate comprises to rows (22) of cavities (5), each row comprising at least one cavity, whereas the cavity in one row is staggered to the cavity in the other row.

13. Process for the transportation of patties (25), **characterized in, that** the patties are staggered.

14. Process according to claim 13, **characterized in, that** the patties comprise a stick, whereas the sticks point at least partially in different directions.
